# EUROPEAN PATENT APPLICATION

(11) **EP 2 538 210 A2**
(43) Date of publication of application: **26.12.2012**
(21) Application number: 12170905.9
(22) Date of filing: 05.06.2012
(51) Int. Cl.: G01N 29/14, G01N 29/44

(54) **Acoustic diagnostic of fielded turbine engines**

(30) Priority: 23.06.2011 US 201113167490
(71) Applicant: United Technologies Corporation, Hartford, CT 06101 (US)
(72) Inventor: Scheid, Paul Raymond, West Hartford, CT 06107 (US); Geib, Andrew F., Glastonbury, CT 06033 (US)
(74) Representative: Tomlinson, Kerry John

(57) **Abstract**

A method for diagnosing faults in an aircraft gas turbine engine comprises gathering an acoustic profile from an on-wing turbine, transmitting the acoustic profile to an analysis system (106), comparing the acoustic profile (108) with known fault profiles, and scheduling maintenance steps (112) based on whether the acoustic profile matches one or more of the known fault profiles. The known fault profiles are retrieved from a library of the analysis system.

## Description

### BACKGROUND

The present invention relates generally to turbine diagnostics, and more particularly to acoustic diagnostics for gas turbine engines of fielded aircraft, i.e. aircraft in service in the field, not off-line or out of service for extended maintenance.

Aircraft turbines require regular maintenance. Maintenance tasks vary from minor line maintenance tasks which can be performed on fielded aircraft, to extended heavy maintenance tasks which can require that aircraft be taken out of service for months. These maintenance tasks are scheduled according to a number of factors including the results of routine diagnostics, but primarily according to aircraft operational history.

Aircraft operational history is an inaccurate indicator of component wear and likely failure. As a result, maintenance scheduling which relies primarily on operational history tends to be conservative, requiring expensive maintenance procedures and aircraft off-line periods at shorter intervals than are necessary for most aircraft.

A variety of diagnostic tools are used to predict incipient faults, including exhaust gas temperature analysis, inlet and outlet debris monitoring, and engine pressure monitoring. Diagnostic tools provide more accurate predictions of incipient faults than can be obtained from operational history alone, thereby improving the accuracy of maintenance scheduling. This increased scheduling accuracy allows aircraft to spend more time on-line, while improving aircraft safety. In addition, costly damage can often be avoided if incipient faults are detected early.

Diagnostic techniques are ideally reliable, precise, inexpensive, and quick. In particular, diagnostic techniques can ideally be performed quickly and easily without taking turbines off-line or off-wing, operations which are both expensive and time-consuming.

Acoustic analysis has previously been used as a development tool for some aircraft turbines. During the design process, acoustic analysis has been used to identify acoustic signatures of a healthy engine and other engine operating characteristics. Acoustic analysis has not, however, been used as a maintenance diagnostic tool. Some current maintenance techniques do monitor noise levels, particularly at turbine exhaust locations. These techniques correlate increases in noise level with efficiency losses from faults, but do not identify faults by acoustic analysis.

### SUMMARY

According to a first aspect, the present invention is directed toward a method for diagnosing faults in a fielded gas turbine engine by gathering an acoustic profile from an on-wing turbine, transmitting the acoustic profile to an analysis system, comparing the acoustic profile with known fault profiles, and scheduling maintenance steps based on whether the acoustic profile matches one or more of the known fault profiles. The known fault profiles are retrieved from a library of the analysis system.
According to a second aspect, the present invention provides a method for diagnosing faults in an aircraft gas turbine engine, the method comprising gathering acoustic data from a plurality of acoustic sensors situated about an on-wing turbine; extracting a plurality of features from the acoustic data to form an acoustic profile; comparing the acoustic profile to a plurality of library profiles from a signature library, the library profiles corresponding to known failure or non-failure modes of the gas turbine engine; and scheduling appropriate maintenance for failure modes corresponding to library profiles matching the acoustic profile.

According to a third aspect, the present invention provides a system for diagnosing faults in an aircraft gas turbine engine, the system comprising an array of acoustic sensors positioned about an on-wing gas turbine engine; a data acquisition and transmission unit which collects and transmits sensor signals from the acoustic sensors; a signal analysis station which receives and processes the sensor signals, the signal analysis station comprising a database mapping a plurality of known acoustic signatures to known failure states; and a processor which compares sensor signals to the known acoustic signatures to produce a diagnosis signal.

### BRIEF DESCRIPTION OF THE DRAWINGS

FIG. 1 is a symbolic view of an acoustic diagnostic system for an aircraft gas turbine engine.

FIG. 2 is a flow chart depicting steps of a method of acoustic diagnostics for an aircraft gas turbine engine.

### DETAILED DESCRIPTION

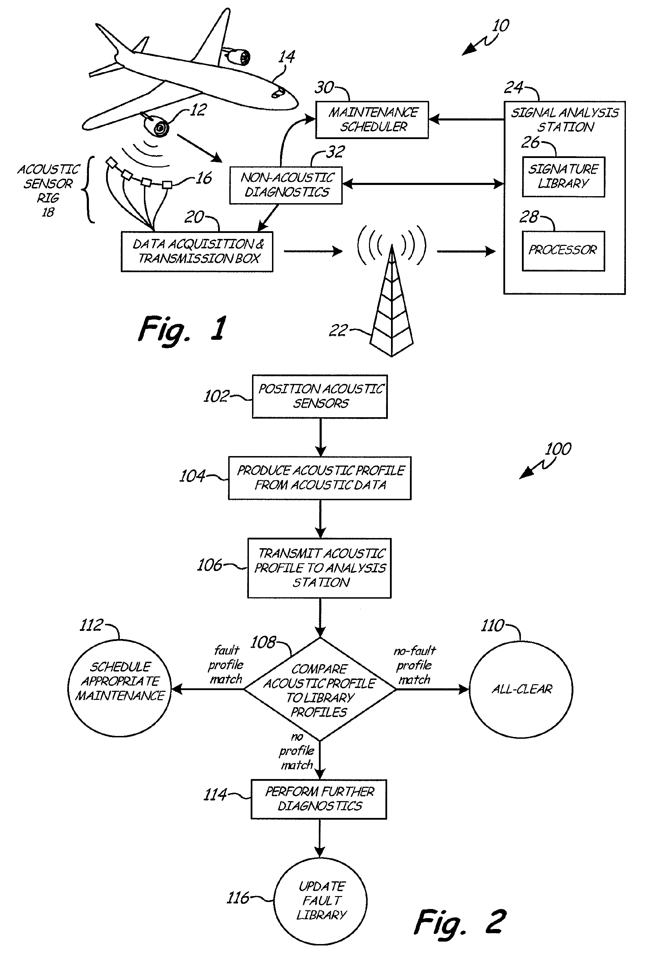

FIG. 1 depicts diagnostic system 10, a system for diagnosing faults in gas turbine engine 12 of aircraft 14. Diagnostic system 10 comprises acoustic sensors 16, acoustic sensor rig 18, data acquisition and transmission unit 20, wireless station 22, signal analysis station 24 (comprising signature library 26 and processor 28), maintenance scheduler 30, and non-acoustic diagnostics unit 32.

Acoustic sensors 16 receive acoustic signals from gas turbine engine 12. In some embodiments, acoustic sensors 16 are integrated into aircraft 14, such as into a housing of gas turbine engine 12. In other embodiments, acoustic sensors 16 are external sensors supported and spaced by acoustic sensor rig 18. Acoustic sensor rig 18 may, for instance, be a series of tripod mounts, or a frame which rests on or attaches to gas turbine engine 12 and spaces acoustic sensors 16 relative to each other and to gas turbine engine 12.

Data acquisition and transmission unit 20 includes a signal or data processing device which collects signals from acoustic sensors 16, and transmits these signals to signal analysis station 24. Data acquisition and transmission unit 20 may be incorporated into an onboard health monitoring unit of aircraft 14, or may be a device located at a line maintenance location. In some embodiments, data acquisition and transmission unit 20 also performs some pre-processing on sensor signals. Signals may be transmitted directly to signal analysis station 24, such as via a wired data connection, or may be transmitted indirectly in packets via an intermediate relay such as wireless station 22, which may be, for instance, a cellular relay.

Signal analysis station 24 is a signal processing system comprising signature library 26 and processor 28. Signature library 26 is a digital storage node such as a database, and catalogues a plurality of sensor signatures corresponding to known failure and non-failure modes of gas turbine engine 12. Processor 28 is a logic-capable component that compares signals from data acquisition and transmission unit 20 with sensor signatures from signature library 26 to produce a failure identification.

Maintenance scheduler 30 is a software component operating on a digital processor or computer. Maintenance scheduler 30 updates a maintenance schedule specific to aircraft 14 in response to the failure identification produced by processor 28. In cases where signal analysis station 24 is unable to identify a failure mode of gas turbine engine 12, non-acoustic diagnostics unit 32 is used to identify turbine faults. Non-acoustic diagnostics unit 32 may include hardware and/or software to perform engine pressure analysis, exhaust gas temperature analysis, or baroscopic diagnostics of gas turbine engine 12. The results produced by non-acoustic diagnostics unit 32 are supplementally used by maintenance scheduler 30 to schedule maintenance.

Acoustic sensors 16 are distributed across gas turbine engine 12, and do not target any specific component of gas turbine engine 12. Acoustic sensors 16 output acoustic signals which indicating amplitude or power as a function of time, across a range of frequencies. Acoustic sensors 16 regularly provide this acoustic data to data acquisition and transmission unit 20. Acoustic sensors 16 may, or instance, listen at approximately 100kHz.

Data acquisition and transmission unit 20 receives acoustic data from acoustic sensors 16, and may perform a variety of conventional pre-processing or de-noising processes on the acoustic data. Data acquisition and transmission unit 20 digitizes the acoustic data, producing an acoustic profile. The acoustic profile may take a variety of forms. In some embodiments, the acoustic profile comprises an N-dimensional list of features extracted from the acoustic data. These features may, for instance, be extracted using MFCC and CELP algorithms, as described in EP 12169867.4.

Data acquisition and transmission unit 20 forwards the acoustic profile to signal analysis station 24. As depicted, data acquisition and transmission unit 20 also receives sensor data from non-acoustic diagnostics unit 32, and integrates or concatenates these data with acoustic profiles produced by acoustic sensors 16. In other embodiments, data acquisition and transmission unit 20 exclusively processes acoustic data.

As depicted in FIG. 1, the acoustic profile produced by data acquisition and transmission unit 20 is transmitted to signal analysis station 24 via wireless station 22. To this end, data acquisition and transmission box comprises a wireless transmitter such as a cellular link, and transmits acoustic profiles in discrete packets. Alternatively, the acoustic profile may be transmitted directly to signal analysis station 24, such as by a continuous wired connection.

Signal analysis station 24 is a signal processing system which receives acoustic profiles from data acquisition and transmission unit 20 and outputs a fault status. Signal analysis station 24 may comprise dedicated task-specific hardware, or may comprise multipurpose hardware running hardware-nonspecific application software. Signal analysis station 24 can be located at a central location remote from aircraft 14, such as at a central server or a remote maintenance facility.

Signal analysis station 24 comprises signature library 26 and processor 28. Signature library 26 houses a database or list of library profiles in the same format as the acoustic profiles transmitted by data acquisition and transmission unit 20. Library profiles include fault library profiles corresponding to known fault modes, and no-fault library profiles corresponding to "healthy" turbine operation modes. Processor 28 compares acoustic profiles from data acquisition and transmission unit 20 with library profiles stored in signature library 26. If digitized acoustic profiles match a no-fault library profile, processor 26 produces a diagnostic all-clear signal. If digitized acoustic profiles match a fault library profile, processor 26 produces a diagnostic fault signal indicating the nature of the fault to which the fault library profile corresponds, such as a blade misalignment or a bearing fault. If the digitized acoustic profile does not match any library profile in library 26, processor 28 produces a diagnostic failure signal indicating that signal analysis station 24 could not diagnose a condition of gas turbine engine 12 based on acoustic data.

If data acquisition and transmission unit 20 receives and forwards non-acoustic diagnostic data, processor 28 will process non-acoustic as well as acoustic data. In some embodiments the processing of non-acoustic diagnostic data is entirely separate from the processing of acoustic data, described above. In other embodiments, library profiles stored in library 26 include both acoustic and non-acoustic features, and processor 28 matches mixed acoustic and non-acoustic profiles from data acquisition and transmission unit 20 to mixed acoustic and non-acoustic library profiles to produce diagnostic all-clear, fault, or failure signals.

Maintenance scheduler 30 receives diagnostic fault or diagnostic all-clear signals from signal analysis station 24, and schedules appropriate maintenance. Immediate maintenance may be scheduled, for example, where a diagnostic fault signal indicates an immediate, urgent fault. In other cases, maintenance dates for line or heavy maintenance may be advanced to prevent incipient faults from developing further. Maintenance scheduler 30 may base maintenance schedules on a data from a plurality of diagnostic and predictive systems other than the acoustic diagnostic system of the present invention.

As depicted in FIG. 1, non-acoustic diagnostics unit 32 may be requested to provide data in response to a diagnostic failure signal from signal analysis station 24. Non-acoustic diagnostics unit 32 may provide a wide range of conventional diagnostic techniques, such as pressure and temperature analysis, inlet and outlet debris monitoring, and direct turbine examination by an aircraft technician, including boroscope examination of gas turbine engine 12. The results produced by non-acoustic diagnostics unit 32 can be used by maintenance scheduler 30 to schedule appropriate maintenance, as necessary. In addition, results from non-acoustic diagnostics unit 32 are sent to signal analysis station 24, associated with the corresponding acoustic profile, and catalogued in signature library 26, thereby building the catalogue of failure states recognized by signal analysis station 24.

FIG. 2 depicts acoustic diagnostic method 100, which has several steps. First, acoustic sensors 16 are positioned about gas turbine engine 12. (Step 102). As previously discussed, this may be accomplished by positioning free acoustic sensors 16 about gas turbine engine 12, or by positioning acoustic sensor rig 18 near or on gas turbine engine 12. Alternatively, acoustic sensors 16 may be incorporated into aircraft 14. In either case, the positioning of acoustic sensors 16 does not necessitate removal of gas turbine engine 12 from aircraft 14. The entirety of acoustic diagnostic method 100 can be performed without removing aircraft 14 from service, or removing gas turbine engine 12 from aircraft 14.

Next, data acquisition and transmission unit 20 collects acoustic data from acoustic sensors 16 and produces at least one acoustic profile, as described above. (Step 104). Many acoustic profiles can be collected at a high sampling rate to improve the predictive accuracy of method 100, up to the a hardware limit determined by the rate of data acquisition, transmission, and processing which components of sustainable by components of diagnostic system 10. Data acquisition and transmission unit 20 digitizes and transmits these acoustic profiles to signal analysis station 24. (Step 106). As previously described, non-acoustic diagnostic information may also be collected and transmitted by data acquisition and transmission unit 20, in some embodiments of the present invention.

Processor 28 of signal analysis station 24 compares digitized acoustic profiles to library profiles from library 26, as described above. (Step 108). A variety of conventional algorithms and statistical techniques can be used to compare digitized acoustic profiles with library profiles, and to determine the strength of matches between acoustic profiles and library profiles. If the acoustic profile is determine to match a no-fault library profile, a diagnostic all-clear signal is transmitted to maintenance scheduler 30. (Step 110). If the acoustic profile is determined to match a fault library profile, a diagnostic fault signal is transmitted to maintenance scheduler 30, and appropriate maintenance is scheduled. (Step 112). If no match for the acoustic profile is found within library 26, a diagnostic failure signal is sent to maintenance scheduler 30 and further data from non-acoustic diagnostics unit 32 are used to assess the nature of any fault, as described above. (Step. 114). If data from non-acoustic diagnostics unit 32 are able to identify the nature of the triggering unrecognized fault, that determination is sent to signal analysis station 24 to update signature library 26, so that future acoustic diagnosis will recognize the fault. (Step 116).

The present invention provides a fast and inexpensive learning diagnostic system for aircraft turbines. This system can be utilized without taking the aircraft off-line, or the turbine off-wing. The system includes a learning system by which signature library 26 can grow to recognize additional faults. By separating signal analysis station 24 from data acquisition and transmission unit 20, the present invention concentrates diagnostic information at signature library 26, allowing diagnostic system 10 to recognize fault modes identified at a first maintenance location when they occur at a second maintenance location. Diagnostic system 10 recognizes incipient faults while reducing diagnostic time, thereby allowing aircraft to spend more time on-line.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for diagnosing faults in an aircraft gas turbine engine (10), the method comprising:
gathering an acoustic profile from an on-wing turbine;
transmitting the acoustic profile to an analysis system;
comparing the acoustic profile with known fault profiles in a library (26) of the analysis system (24), the library profiles corresponding to known failure or non-failure modes of the gas turbine engine; and
scheduling maintenance steps based on whether the acoustic profile matches one or more of the known fault profiles.

2. The method of claim 1, further comprising:
scheduling additional diagnostics to be performed if the acoustic profile does not match any of the known fault profiles; wherein preferably said additional diagnostics are non-acoustic diagnostics.

3. The method of claim 2, further comprising:
updating the library (26) with the results of the additional diagnostics.

4. The method of claim 1, 2 or 3, wherein scheduling maintenance steps comprises advancing line or heavy maintenance times.

5. The method of claim 1, 2, 3 or 4, wherein the acoustic profile is gathered by a plurality of external acoustic sensors (16) arranged about the on-wing turbine; preferably wherein the external acoustic sensors (16) are mounted at known intervals on a sensor rig.

6. The method of claim 1, 2, 3 or 4, wherein the acoustic profile is gathered by a plurality of on-board acoustic sensors (16) integrated into the gas turbine engine (12) or the aircraft body.

7. The method of any preceding claim wherein the step of gathering an acoustic profile comprises:
gathering acoustic data from a plurality of acoustic sensors (16); and
extracting a plurality of features from the acoustic data to form an acoustic profile.

8. The method of claim 7, further comprising:
reporting an unknown failure mode if the acoustic profile does not match any library profile from the library (26).

9. The method of claim 7 or 8, wherein the plurality of features is exacted from the acoustic data using a MFCC or CELP algorithm, or a combination of MFCC and CELP algorithms.

10. A system (10) for diagnosing faults in an aircraft gas turbine engine (12), the system comprising:
an array of acoustic sensors (16) positioned about an on-wing gas turbine engine (12);
a data acquisition and transmission unit (20) which collects and transmits sensor signals from the acoustic sensors;
a signal analysis station (24) which receives and processes the sensor signals, the signal analysis station comprising:
a database (26) mapping a plurality of known acoustic signatures to known failure states; and
a processor (28) which compares sensor signals to the known acoustic signatures to produce a diagnosis signal.

11. The system of claim 10, further comprising:
a maintenance scheduler (30) which schedules maintenance times according to a diagnosis signal.

12. The system of claim 10 or 11, further comprising:
a non-acoustic diagnostics unit used when the diagnosis signal indicates an unknown failure state; preferably wherein a failure state diagnosis made by the non-acoustic diagnostics is used to update the database (26).

13. The system of claim 12, wherein the non-acoustic diagnostics unit is configured to perform boroscopic examination of the gas turbine engine.

14. The system of claim 10, 11, 12 or 13, wherein the processor (28) also uses pressure, temperature, or debris sensor readings from the gas turbine engine (12) to produce a failure state diagnosis; preferably wherein the database (26) maps a plurality of sensor signatures including pressure, temperature, or debris signatures, to known failure rates.

15. The system of any of claims 10 to 14, wherein the sensor signals are broadcast to the signal analysis station (24) via wireless communication (22).
